Europäisches Patentamt

**European Patent Office**

**Office européen des brevets**

(11) Veröffentlichungsnummer: **0 113 320**
**A1**

(12) # EUROPÄISCHE PATENTANMELDUNG

(21) Anmeldenummer: **83810627.6**

(22) Anmeldetag: **30.12.83**

(51) Int. Cl.³: **F 02 B 75/32**
F 16 C 9/04, F 16 C 3/08
F 16 J 1/16

(30) Priorität: **30.12.82 CH 7626/82**

(43) Veröffentlichungstag der Anmeldung:
**11.07.84 Patentblatt 84/28**

(84) Benannte Vertragsstaaten:
**DE FR GB IT SE**

(71) Anmelder: **Heidegger, Max**
**Hauptstrasse 89**
**FL-9495 Triesen(LI)**

(72) Erfinder: **Heidegger, Max**
**Hauptstrasse 89**
**FL-9495 Triesen(LI)**

(74) Vertreter: **Büchel, Kurt F., Dr.**
**Austrasse 4**
**FL-9490 Vaduz(LI)**

(54) **Verbrennungsmotor.**

(57) In einem Verbrennungsmotor mit einer Kurbelwelle (8),
die wenigstens eine Kröpfung (14) mit zwei Kurbelwangen
(16) und einem Kurbelzapfen (15) aufweist, haben die den
Kurbelwangen (16) zugekehrten Flächen (120) der Pleuelstange (7) im Bereiche rund um das grosse Pleuelauge (17)
einen Abstand (D), so dass die Pleuelstange (7) seitlich
ungeführt ist. Es kann auch im Bereiche des kleinen Pleuelauges (11) ein kleiner Abstand (d) der Seitenflächen (122) der
Pleuelstange (7) von den gegenüberliegenden Flächen (26)
der Lagerwangen (9) des Kolbens (2) vorgesehen sein.

EP 0 113 320 A1

./...

- 1 -

0113320

Die Erfindung bezieht sich auf einen Verbrennungsmotor, insbesondere Viertaktmotor, mit wenigstens einem eine Verbrennungskammer aufweisenden Zylinder, welche Verbrennungskammer an einer Seite durch einen im Zylinder zu einer hin- und hergehenden Bewegung geführten Kolben begrenzt ist, an dem eine Pleuelstange mit ihrem kleinen Pleuelauge mittels eines sich zwischen Lagerwangen des Kolbens erstreckenden Kolbenbolzen gelagert ist, wogegen das andernends gelegene, vorzugsweise durch einen Schmiermittelkanal mit dem kleinen Pleuelauge verbundene grosse Pleuelauge dieser Pleuelstange einen zwischen zwei Kurbelwangen der Kröpfung einer Kurbelwelle verlaufenden Kurbelzapfen umgreift.

Herkömmlich ist eine solche Konstruktion so beschaffen, dass die den beiden Kurbelwangen zugekehrten Seitenflächen der Pleuelstange rund um das grosse Pleuelauge jeweils von den Kurbelwangen seitlich geführt sind und der Ansatz des Kurbelzapfens an den Kurbelwangen eine Rundung aufweist, an die die Seitenfläche rund um das grosse Pleuelauge angepasst sein muss. Dies erfordert eine genaue Bearbeitung dieser Flächen, die einer grossen Reibungsbeanspruchung ausgesetzt sind und daher aus besonders verschleissfestem Material bestehen oder einem nachträglichen Härteverfahren unterzogen werden müssen. Anderseits bewirkt im Betrieb die Reibung bei den gerade in diesem Bereich auftretenden hohen Geschwindigkeiten eine besondere Abnützung, bis hin zu einem Motorlagerschaden, sowie Leistungsverlust, bzw. Treibstoffmehrverbrauch, insbesondere weil durch herstellungsbedingt zu grosse Toleranzen die Schmierung nicht immer optimal ist. Diese Nachteile hat man aber bisher in Kauf genommen, weil man anders eine Seitenführung nicht erzielen konnte und auf diese nicht verzichten wollte (vgl. Cesare Bossaglia "Il Motore a Due Tempi di Alta Pressione", Automobile Club d'Italia, 1968, S. 188 ff).

Der Erfindung liegt die Aufgabe zugrunde, eine einfachere und billigere Herstellung eines Verbrennungsmotors der eingangs genannten Art zu ermöglichen, sowie Reibungsverluste zu verringern (und dadurch den Wirkungsgrad zu erhöhen), mit weniger Arbeits- und Materialaufwand auszukommen und dabei eine geringere Abnützung im Betrieb zu erzielen. Ebenso sollten grössere Bearbeitungstoleranzen zugelassen werden können, und die Anfroderungen an die Oberflächenbeschaffenheit sollten reduziert werden können. Dabei geht die Erfindung von der verblüffenden Erkenntnis aus, dass die seit jeher vertretene Meinung, es müsse im Bereiche des grossen Pleuelauges eine Seitenführung durch die Kurbelwangen gegeben sein, einfach auf einem Vorurteil beruht, und es hat sich in der Praxis in Dauerversuchen als vorteilhaft herausgestellt, wenn gemäss der Erfindung die den beiden Kurbelwangen zugekehrten Seitenflächen der Pleuelstange rund um das grosse Pleuelauge jeweils in einem Abstand von den Kurbelwangen angeordnet sind, wobei die Pleuelstange 7 unter Vermeidung von Rollen- bzw. Wälzlagern (wenigstens) am Kurbelzapfen 15 seitlich ungeführt ist.

In der Praxis geschieht dies vorzugsweise dadurch, dass die Kurbelwangen enger aneinander rücken, wodurch das kleine Pleuelauge, übrigens auch hinsichtlich seines Lagers, unverändert bleibt, und dass das grosse Pleuelauge etwas schmäler (abgedreht) wird, während die Kurbelwangen unverändert bleiben. Damit wird das grösse Pleuelauge unter Umständen sogar etwas schmäler als das kleine und spart somit Gewicht.

Fachleute haben erwartet, dass unter diesen Umständen die Pleuelstange verkantet und/oder der Motor einen Lagerschaden erleidet und dadurch blockiert oder zerrissen wird. Dies hat sich jedoch nicht bewahrheitet; im Gegenteil ist durch diesen Abstand der Seitenflächen von den Kurbelwangen die ganze Konstruktion leichter, und der Reibungswiderstand sinkt, was sich besonders bei hochtourigen Motoren vorteilhaft auswirkt. Ebenso wird der Wirkungsgrad durch die Senkung der Reibungsverluste verbessert, das Oel wird weniger warm, die Herstellung ebenso wie die Reparatur werden einfacher und dadurch billiger, da das Schleifen und eventuell Härten der Anlaufflächen entfällt. Auf diese Vorteile musste man bisher verzichten, weil man nicht erkannte, dass die schlechten Erfahrungen bei ähnlichen Konstruktionen nur auf die Verwendung von Rollenlagern zurückzuführen waren, auf die man bei Hochleistungsmotoren nicht verzichten zu können glaubte.

Grundsätzlich hat es sich als möglich erwiesen, die Pleuelstange nicht nur unten auf der Kurbelwelle, sondern auch oben am Kolbenbolzen mit einem Spiel seitlich ungeführt zu lassen. Es kann daher auch im Bereiche des kleinen Pleuelauges wenigstens eine Seitenfläche der Pleuelstange in einem Toleranzabstand von der ihr zugeordneten Anlauffläche der Lagerwange des Kolbens angeordnet sein, wobei das Gesamtspiel im Bereich des kleinen Pleuelauges jedenfalls kleiner sein muss, als die Summe der beiden Abstände der Anlaufflächen im Bereich des grossen Pleuelauges. Es ergibt sich dabei gegebenenfalls, dass das kleine Pleuelauge seitlich verrutscht, bis es nur mehr mit einer Seitenfläche im Abstand von der Lagerwange des Kolbens liegt und mit der anderen Seitenfläche an die gegenüberliegende Lagerwange anläuft.

Selbst in diesem Fall bleiben die Seitenflächen rund um das grosse Pleuelauge jedoch in einem sicheren Abstand von den Kurbelwangen, so dass sich dort kein Reibungs- oder Flächenkontakt ergeben kann und daher auch diese Flächen nicht genau bearbeitet werden müssen. Anderseits spielt es weniger eine Rolle, wenn etwa eine Seitenfläche rund um das kleine Pleuelauge die Lagerwange des Kolbens berührt, weil es sich dort nur um kleine Winkelbewegungen mit wesentlich geringerer Geschwindigkeit handelt.

Damit durch das soeben besprochene Verrutschen der Pleuelstange am Kolbenbolzen auch dann keine einseitige Belastung des Kolbens entsteht, wenn etwa aus konstruktiven Gründen die Lagerwangen des Kolbens nicht so weit in das Innere des Kolbentopfes reichen, kann vorzugsweise wenigstens auf einer Seite des kleinen Pleuelauges wenigstens eine Beilagscheibe, Hülse, od. dgl. vorgesehen sein. Gegenüber

- 4 -

der herkömmlichen Bauweise ist damit die Seitenführung der
Pleuelstange vom Kröpfungsbereich der Kurbelwelle, wo sich
grosse Geschwindigkeiten und eine besondere Beanspruchung
ergeben, zur Gänze an einen Ort verlegt, wo die Bewegungsgrösse und die Geschwindigkeit nur klein sind und die
Abnützung daher nur gering ist. Es ist bevorzugt, wenn der
Abstandhalter, d.h. die Beilagsscheibe bzw. die Hülse,
entweder aus weichem oder aus härterem Material bestehen,
als die benachbarten Teile der Lagerwangen, bzw. der
Pleuelstange. Es kann aber auch die Toleranz zwischen den
beiden Seitenflächen der Lagerwangen im Kolben einerseits
und dem kleinen Pleuelauge andererseits so gering gewählt
werden, dass es nicht mehr erforderlich ist, eine Spielkorrektur durch den Abstandhalter vorzunehmen.

Es wurde bereits erwähnt, dass durch die erfindungsgemässe
Ausbildung eine besondere Bearbeitung der verschiedenen
Anlaufflächen entfallen kann. Deshalb ist es im Rahmen der
Erfindung völlig ausreichend, wenn die Innenflächen der
Kurbelwangen bzw. der Lagerwangen und/oder die Seitenflächen der Pleuelstange rund um wenigstens eines der
Pleuelaugen nur geschruppt bzw. fein gedreht sind. Das
bisher erforderliche Grobschleifen, Härten und Feinschleifen entfällt, und zwar wegen der Berührungsfreiheit im
Bereich des grossen Pleuelauges einerseits und wegen der
relativ kleinen Winkelbewegung des kleinen Pleuelauges
andererseits.

Da die bisher den Kurbelzapfen weit überragenden Kurbelwangen ihre bisherige Führungsfunktion nicht mehr auszuüben brauchen, kann auch die Kurbelwelle, bzw. die
Kröpfung leichter ausgeführt werden, indem vorzugsweise
die Kurbelwangen mit geringem, vorzugsweise ohne, Ueberstand in den Kurbelzapfen übergehen, wobei zusätzlich oder alternativ eine weitere Erleichterung der Bauweise dadurch gegeben sein kann, dass das Ende wenigstens einer Kurbelwange an der dem Kurbelzapfen abgewandten Aussenseite gegen den Kurbelzapfen hin abgeschrägt ist.

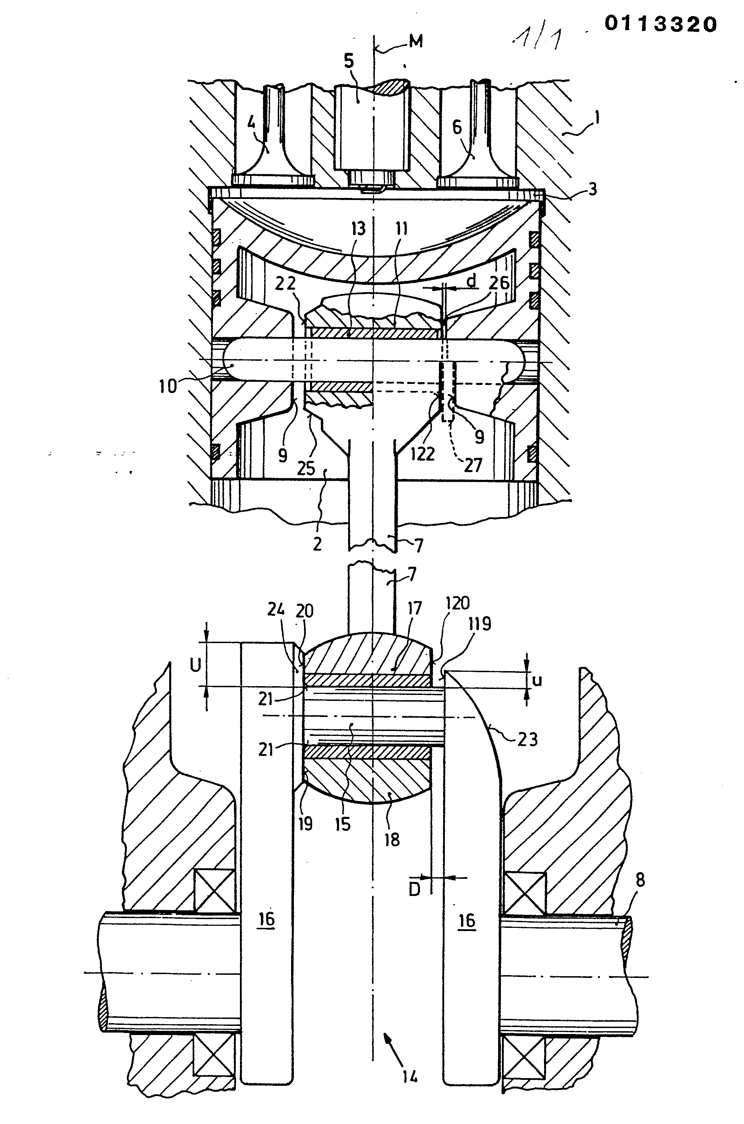

Weitere Einzelheiten ergeben sich an Hand der nachfolgenden Beschreibung eines in der einzigen Figur der Zeichnung veranschaulichten Ausführungsbeispieles, wobei links der Mittellinie M die Ausführung nach dem Stande der Technik, rechts ein erfindungsgemässes Ausführungsbeispiel dargestellt sind.

Ein Verbrennungsmotor weist einen lediglich schematisch angedeuteten Zylinder 1 auf, in dem ein topfförmiger Kolben 2 zu einer auf- und abgehenden Bewegung geführt ist. Oberhalb des Kolbens 2 ist eine Verbrennungskammer 3, in die ein Brennstoffgemisch über ein Einlassventil 4 eingelassen werden kann und dort durch den Zündfunken einer Zündkerze 5 in üblicher Weise zur Verbrennung gebracht wird, worauf das verbrannte Gas im nächsten Takt über ein Auslassventil 6 abgelassen wird.

Die Bewegung des Kolbens 2 wird mit Hilfe einer Pleuelstange 7 auf eine Kurbelwelle 8 übertragen. Hiezu weist der Kolben 2 in sein topfförmiges Innere ragende Lagerwangen 9 auf, in denen ein Kolbenbolzen 10 sitzt, den die Pleuelstange 7 mit einem kleinen Pleuelauge 11 umgreift, das eine Lagerbuchse 13 aufweist.

Die Kurbelwelle 8 weist in üblicher Weise eine Kröpfung 14 auf, die aus einem Kurbelzapfen 15 zwischen zwei Kurbelwangen 16 besteht. An diesem Kurbelzapfen 15 greift das grosse Pleuelauge 17 der Pleuelstange 7 an, die in diesem Bereich zweiteilig ausgebildet sein kann und mit einer Lagerhalbschale 18 den Kurbelzapfen 15 von unten her umschliesst. Diese Lagerschale 18 ist in nicht dargestellter, üblicher Weise an der Pleuelstange 7 befestigt.

Aus der linken Seite der Zeichnung sind die Seitenführungsflächen 19 bzw. 20 der Kurbelwange 16 bzw. der Pleuelstange 7 im Bereiche des grossen Pleuelauges 17 ersichtlich. Dabei müssen nicht nur die ebenen Passflächen genau bearbeitet und glatt sein, sondern auch die Rundung 21 am Ansatz des Kurbelzapfens 15 an diesem selbst und an der Seitenfläche 20 der Pleuelstange und zu beiden Seiten derselben nach dem Härten nochmals exakt geschliffen werden. Es versteht sich, dass wegen der hohen Reibung an diesen Flächen auch das Material und die Nachbehandlung der zugehörigen Teile sorgfältig ausgewählt sein muss.

Im Bereiche des kleinen Pleuelauges 11, wo die Stirnflächen der Lagerwangen 9 gegenüber den Seitenflächen 22 rund um das kleine Pleuelauge 11 bisher im Abstand lagen (linke Seite der Zeichnung), liegen diese beiden Anlaufflächen jetzt nur mehr in einem Toleranzabstand d von z.B. 0,1 mm bis 0,3 mm (obere Hälfte der rechten Seite der Zeichnung), bzw. sind durch einen Abstandhalter in Form einer Anlauf-(Beilag-)Scheibe 27 getrennt (untere Hälfte der rechten Seite der Zeichnung), so dass die Pleuelstange 7 bei ihrer Kurbelbewegung eine seitliche Führung findet.

Versuche haben nun gezeigt, dass - wenn die Pleuelstange 7 oben im Kolben 2 die Seitenführung findet - auf die Seitenführung (wenigstens) im Bereiche des grossen Pleuelauges 17 verzichtet werden kann, ohne dass die Lebensdauer des Motors beeinträchtigt würde, und ohne seine Reparaturanfälligkeit zu erhöhen. Im Gegenteil: dadurch,dass sich weniger Flächen berühren, wird der Verschleiss und damit die Reparaturanfälligkeit erniedrigt. Gemäss der Darstellung rechts der Mittellinie M haben die Seitenflächen 120 rund um das grosse Pleuelauge 17 von den Kurbelwangen 16 einen Abstand D von z.B. 1 mm bis 2 mm, so dass die Bearbeitung dieser Flächen nicht so genau erfolgen muss. Auch die entsprechenden Flächen 119 der Kurbelwangen 16 können vorzugsweise ebenso wie die Flächen 120 nur geschruppt sein. Die Bearbeitung der Rundungen 21 an Kurbelzapfen 15 und Seitenflächen 20 kann ebenfalls entfallen. Durch den beidseitig gegebenen Abstand D wird aber auch die Konstruktion der Pleuelstange 7 im Bereiche des grossen Pleuelauges 17 und damit die oszillierende Masse reduziert, da die bisher überstehenden Seitenflächen 120 jetzt bündig mit dem Pleuellager 13 abschliessen können, was gerade einem modernen hochtourigen Motor sehr zustatten kommt.

Da nun die Seitenführungsfunktion der Kurbelwangen 16 wegfällt, kann auch die Kurbelwelle im Bereiche ihrer Kröpfung 14 gewichtsmässig leichter ausgeführt sein. So entfällt der die Seitenführungsfläche 19 aufweisende Kegel 24, und es ergeben sich ebene Kurbelwangenflächen 119. Auch kommt der über die Aussenfläche des Kurbelzapfens 15 hinausragende Ueberstand U teilweise oder auch zur Gänze in Wegfall, wobei gemäss der Darstellung lediglich ein verkürzter Ueberstand u vorgesehen sein kann. Schliesslich kann die Konstruktion auch noch dadurch erleichtert werden, dass die Kurbelwangen 16 statt der in Seitenansicht rechteckigen Bauweise, wie in der linken Darstellung, an der dem Kurbelzapfen 15 abgewandten Aussenseite eine Abschrägung 23 gegen
den Kurbelzapfen hin aufweisen. Es kann somit auch die
rotierende Masse reduziert werden.

Aehnlich kann die Konstruktion im Bereiche des kleinen
Pleuelauges 11 sein. Der die Seitenflächen 22 tragende
Kegel 25 kann entfallen, so dass sich ebene, bündige
Seitenflächen 122 ergeben. Damit erhalten diese Seitenflächen 122 von den Lagerwangen 9 des Kolbens 2 einen
Abstand d, der so bemessen ist, dass die Summe 2 d der
Abstände der Seitenflächen 122 von den Lagerwangen 9
kleiner ist als die Summe 2 D der Abstände der Seitenflächen 120 von den Kurbelwangen 16 und deren Innenflächen 119. Die Summe 2 D beträgt mindestens 0,5, vorzugsweise mindestens 1, beispielsweise 4 bis 8 mm.
In der obigen Bemessungsangabe ist deshalb die Summe beider
Abstände d bzw. D zu berücksichtigen, weil in der Praxis
die seitlich ungeführte Pleuelstange 7 ohne weiteres
asymmetrisch verrutschen kann, so dass die Abstände d links
und rechts ungleich sind, was auch von den Abständen D
gilt. Dabei ist in Kauf zu nehmen, dass eine Seitenfläche
122 gegebenenfalls die Lagerwange 9 berührt und daher die
gegenüberliegende Seitenfläche 122 den doppelten Abstand 2 d
von der Lagerwange 9 besitzt, doch sollen die Flächen 120
im Bereiche des grossen Pleuelauges 17 keinesfalls an den
Flächen 119 der Kurbelwangen 16 anliegen. Denn wenn diese
Flächen 119, 120 gemäss der bevorzugten Ausführung nur
geschruppt sind, könnte ein Reibungskontakt angesichts der
hohen Relativgeschwindigkeit zwischen diesen beiden
Flächen 119, 120 nachteilige Folgen haben.

In der Praxis hat sich auch erwiesen, dass eine geringfügig asymmetrische Anordnung der Pleuelstange 7 am Kolbenzapfen 10 nicht unbedingt stört, insbesondere wenn die Lagerwangen 9 nur wenig mehr voneinander entfernt sind, als der Länge des kleinen Pleuelauges 11 entspricht und daher die Verschiebung der Pleuelstange 7 entlang des Kolbenbolzens 10 jedenfalls nur gering sein kann. Es hat sich aber gezeigt, dass auf Grund der Führung des Kolbens 2 im Zylinder 1 die von Fachleuten befürchtete Verkantung des Kolbens 2 auch bei geringfügig asymmetrischer Anordnung der Pleuelstange 7 am Kolbenbolzen 10 nicht eintritt. Es spielt auch keine Rolle, wenn eine der ebenfalls vorzugsweise nur geschruppten Flächen 122 des kleinen Pleuelauges 11 die gegenüberliegende Fläche 26 der Lagerwange 9 berührt, weil damit nicht nur der Druck, sondern insbesondere die Relativgeschwindigkeit zwischen diesen Flächen auf Grund der nur kleinen Schwenkbewegung des kleinen Pleuelauges 11 bei einer ganzen Auf- und Abbewegung der Pleuelstange 7, bzw. einer vollständigen Umdrehung der Kurbelwelle 8 sehr gering ist. Im Prinzip aber wird erfindungsgemäss die seitliche Führung der Pleuelstange 7, die bisher vom grossen Pleuelauge 17 übernommen wurde, auf das kleine Pleuelauge 11 verlegt.

Falls aus konstruktiven Gründen eine Verkürzung der Lagerwangen 9 im Bereich des kleinen Pleuelauges 11(wie in der rechten Darstellung der Zeichnung, untere Hälfte) erforderlich ist, bzw. man eine zu weitgehende asymmetrische Auswanderung der Pleuelstange 7 nach einer Seite hin vermeiden will, können eine oder mehrere Beilagscheiben 27 (strichliert angedeutet), oder eine entsprechend geeignete Hülse an wenigstens einer Seite der Pleuelstange 7 das freie Spiel der Pleuelstange begrenzen.

Wenn auch das Ausführungsbeispiel gemäss der Zeichnung
nur einen einzigen Kolben 2 bzw. Zylinder 1 zeigt, versteht es sich doch, dass die erfindungsgemässe Ausbildung
bei mehrzylindrigen Motoren ebenfalls anwendbar ist und
dort auf Grund der Trägheitsmomentverringerung sogar noch
grössere Vorteile bringt. Gleichzeitig wird die Herstellung solcher Motoren vereinfacht und verbilligt und
ihr Wirkungsgrad erhöht. Dabei ist es an sich gleichgültig, um welchen Typ von Verbrennungsmotor es sich
handelt, ob um einen Zweitakt-, einen Viertakt- oder um
einen Dieselmotor. Auch sind zahlreiche Abwandlungen
möglich, etwa die Ausbildung einer Abschrägung 23 an nur
einer Kurbelwange einer Kröpfung 14.

PATENTANSPRUECHE

1. Verbrennungsmotor, insbesondere Viertaktmotor, mit
   wenigstens einem eine Verbrennungskammer aufweisenden
   Zylinder, welche Verbrennungskammer an einer Seite
   durch einen im Zylinder zu einer hin- und hergehenden
   Bewegung geführten Kolben begrenzt ist, an dem eine
   Pleuelstange mit ihrem kleinen Pleuelauge mittels
   eines sich zwischen Lagerwangen des Kolbens erstreckenden Kolbenbolzens gelagert ist, wogegen das
   andernends gelegene, vorzugsweise durch einen Schmiermittelkanal mit dem kleinen Pleuelauge verbundene
   grosse Pleuelauge dieser Pleuelstange einen zwischen
   zwei Kurbelwangen der Kröpfung einer Kurbelwelle verlaufenden Kurbelzapfen umgreift, dadurch gekennzeichnet,
   dass die den beiden Kurbelwangen (16) zugekehrten
   Seitenflächen (120) der Pleuelstange (7) rund um das
   grosse Pleuelauge (17) jeweils in einem Abstand (D)
   von den Kurbelwangen (16) angeordnet sind, wobei die
   Pleuelstange (7) unter Vermeidung von Rollen- bzw.
   Wälzlagern wenigstens am Kurbelzapfen (15) seitlich
   ungeführt ist.

2. Verbrennungsmotor nach Anspruch 1, dadurch gekennzeichnet,
   dass auch ein beiderseitiges Spiel (d) des kleinen Pleuelauges (11) auf dem Kolbenbolzen (10) vorgesehen ist, wobei die Abstände (2 D) der Seitenflächen (120) rund um
   das grosse Pleuelauge (17) von den Kurbelwangen (16)
   zusammen grösser sind als das Gesamtspiel (2 d) des
   kleinen Pleuelauges (11) auf dem Kolbenbolzen (10),
   und mindestens 0,5, vorzugsweise mindestens 1 mm betragen.

3. Verbrennungsmotor nach Anspruch 2, dadurch gekennzeichnet, dass wenigstens auf einer Seite des kleinen Pleuelauges (11) wenigstens eine Beilagscheibe (17), Hülse od.dgl. angeordnet ist.

4. Verbrennungsmotor nach Anspruch 3, dadurch gekennzeichnet, dass die Beilagscheibe (17), Hülse, od. dgl. aus einem Material unterschiedlicher Härte gegenüber derjenigen der Pleuelstange (7) und der Lagerwangen (9) besteht.

5. Verbrennungsmotor nach einem der Ansprüche 1 bis 4, dadurch gekennzeichnet, dass die Innenflächen (119) der Kurbelwangen (16) bzw. der Lagerwangen (9) und/oder die Seitenflächen (120, 122) der Pleuelstange (7) rund um wenigstens eines der Pleuelaugen (11, 17) nur geschruppt oder fein gedreht sind.

6. Verbrennungsmotor nach einem der Ansprüche 1 bis 5, dadurch gekennzeichnet, dass die Kurbelwangen (16) mit keinem oder nur geringem Ueberstand (u) in den Kurbelzapfen (15) übergehen.

7. Verbrennungsmotor nach einem der Ansprüche 1 bis 6, dadurch gekennzeichnet, dass das Ende wenigstens einer Kurbelwange (16) an der dem Kurbelzapfen (15) abgewandten Aussenseite gegen den Kurbelzapfen (15) hin abgeschrägt ist.

Europäisches
Patentamt

EUROPÄISCHER RECHERCHENBERICHT

0113320
Nummer der Anmeldung

EP 83 81 0627

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y,D | CESARE BOSSAGLIA: "Il motore a due tempi di alte prestazioni", 1968, Automobile Club d'Italia, Rome, IT.<br>* Seite 188, Absatz 3 - Seite 190, Absatz 1; Figuren 112-113 * | 1,3 | F 02 B 75/32<br>F 16 C 9/04<br>F 16 C 3/08<br>F 16 J 1/16 |
| | --- | | |
| Y | DE-B-1 008 527 (MAK)<br>* Figuren 1-6; Spalte 1, Zeile 1 - Spalte 4, Zeile 2 * | 1,6,7 | |
| | --- | | |
| A | GB-A- 503 007 (SULZER)<br>* Figuren 1,2; Seite 1, Zeile 76 - Seite 2, Zeile 2 * | 1,6 | |
| | --- | | |
| A | P.M. HELDT: "High-speed combustion engines", herausgegeben 1944 on Iliffe & Sons, Ltd., London, GB.<br>* Seite 224, letzter Absatz; Seite 225, Figur 6 * | 2 | RECHERCHIERTE SACHGEBIETE (Int. Cl. ³) |
| | --- | | |
| A | US-A-2 747 953 (LAUBENDER)<br>* Figur 1; Spalte 2, Zeilen 40-52 * | 2-4 | F 02 B<br>F 01 B<br>F 16 C<br>F 16 J |
| | --- | | |
| A | DE-A-2 904 387 (DAIMLER-BENZ)<br>* Figur 5; Seite 11, Zeilen 5-16 * | 7 | |
| | ---    -/- | | |

Der vorliegende Recherchenbericht wurde für alle Patentansprüche erstellt.

| Recherchenort<br>DEN HAAG | Abschlußdatum der Recherche<br>28-02-1984 | Prüfer<br>VON ARX H.P. |
|---|---|---|

# Europäisches Patentamt

## EUROPÄISCHER RECHERCHENBERICHT

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-2 160 586 (SCHMIDT) <br> * Figuren 1,4; Seite 5, Absätze 3,6 * <br><br> ----- | 6,7 | |

RECHERCHIERTE SACHGEBIETE (Int. Cl. 3)

Der vorliegende Recherchenbericht wurde für alle Patentansprüche erstellt.

| Recherchenort <br> DEN HAAG | Abschlußdatum der Recherche <br> 28-02-1984 | Prüfer <br> VON ARX H.P. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82